# EUROPÄISCHE PATENTANMELDUNG

(11) **EP 1 354 852 A2**
(43) Veröffentlichungstag der Anmeldung: **22.10.2003**
(21) Anmeldenummer: 03000301.6
(22) Anmeldetag: 09.01.2003
(51) Int. Cl.: C01B 3/32

(54) **Verdampferanordnung zur Erzeugung eines in einem Reformer zur Wasserstoffgewinnung zersetzbaren Kohlenwasserstoff/Luft-Gemisches und Verfahren zum Betreiben einer derartigen Verdampferanordnung**

(30) Priorität: 19.04.2002 DE 10217675
(71) Anmelder: J. Eberspächer GmbH & Co. KG, 73730 Esslingen (DE)
(72) Erfinder: Eberspach, Günter, 72649 Wolfschlugen (DE)

(57) **Zusammenfassung**

Eine Verdampferanordnung zur Erzeugung eines in einem Reformer zur Wasserstoffgewinnung zersetzbaren Kohlenwasserstoff/Luft-Gemisches, umfasst einen Brenner/Verdampfer-Bereich, welcher aufweist: eine Brenn/Misch-Kammer (14), in welche Luft über eine Eintrittsöffnungsanordnung (16) eintritt, eine Kohlenwasserstoffverdampfungseinrichtung (24, 34), umfassend ein poröses Verdampfermedium (24) und diesem zugeordnet eine erste Heizeinrichtung (34) und ein Glühzündorgan (28) zum Zünden von in der Brenn/Misch-Kammer (14) vorhandenem Kohlenwasserstoff/Luft-Gemisch.

## Beschreibung

Die vorliegende Erfindung betrifft eine Verdampferanordnung zur Erzeugung eines in einem Reformer zur Wasserstoffgewinnung zersetzbaren Kohlenwasserstoff/Luft-Gemisches und ein Verfahren zum Betreiben einer derartigen Verdampferanordnung.

Reformer werden dazu eingesetzt, in einer katalytischen Reaktion Kohlenwasserstoffe oder kohlenwasserstoffhaltige Materialien aufzuspalten und dabei Wasserstoff freizusetzen bzw. zu gewinnen. Dieser Wasserstoff kann beispielsweise in Brennstoffzellen zur Erzeugung elektrischer Energie genutzt werden, oder kann in einem Abgasführungssystem einer Brennkraftmaschine zur Abgasaufbereitung genutzt werden. Um das in derartigen Reformern einem Katalysatormaterial zugeleitete Gemisch umsetzen zu können bzw. die katalytische Reaktion starten und aufrechterhalten zu können, ist es erforderlich, den Bereich des Reformers, also im Wesentlichen die mit dem Gemisch in Kontakt tretenden Baugruppen bzw. auch das Katalysatormaterial, ebenso wie das Gemisch auf eine bestimmte Betriebstemperatur zu bringen. Die Temperatur zur Wasserstoffgewinnung aus einem Dieseldampf/Luft-Gemisch liegt zum Starten der katalytischen Reaktion im Bereich von 320°C. Ist diese Reaktion einmal in Gang gesetzt, kann sie bei einer Temperatur von etwa 240°C fortgesetzt werden. Dies bedeutet aber, dass insbesondere beim Einsatz in Kraftfahrzeugen eine möglichst schnelle Erwärmung der relevanten Systembereiche von vergleichsweise niedrigen Temperaturen, die im Bereich von bis zu -40°C liegen können, auf diese vergleichsweise hohen Betriebstemperaturen stattfinden muss. Hierzu ist es im Allgemeinen bekannt, unter Belastung des Bordspannungssystems von Fahrzeugen die wesentlichen Systemkomponenten zu heizen und auch die Energie zur Verdampfung des im Allgemeinen in flüssiger Form vorliegenden Brennstoffs bzw. Kohlenwasserstoffs zu gewinnen. Dies stellt jedoch eine sehr hohe Belastung des Bordenergieversorgungssystems dar, mit der Folge, dass auf Grund begrenzter Leistungsfähigkeit die zum Erreichen der erforderlichen Temperaturen verstreichende Zeit sehr lang sein kann.

Ziel der vorliegenden Erfindung ist es, eine Verdampferanordnung zur Erzeugung eines in einem Reformer zur Wasserstoffgewinnung zersetzbaren Kohlenwasserstoff/Luft-Gemisches sowie ein Verfahren zum Starten einer derartigen Verdampferanordnung bereitzustellen, bei welchen in energetisch sehr effizienter Art und Weise die Zeitdauer bis zum Erreichen der insbesondere im Bereich eines Katalysatormaterials erforderlichen Betriebstemperaturen gering gehalten wird.

Gemäß einem ersten Aspekt der vorliegenden Erfindung wird diese Aufgabe gelöst durch eine Verdampferanordnung zur Erzeugung eines in einem Reformer zur Wasserstoffgewinnung zersetzbaren Kohlenwasserstoff/Luft-Gemisches, umfassend einen Brenner/Verdampfer-Bereich mit einer Brenn/Misch-Kammer, in welche Luft über eine Eintrittsöffnunsanordnung eintritt, einer Kohlenwasserstoffverdampfungseinrichtung, umfassend ein poröses Verdampfermedium und diesem zugeordnet eine erste Heizeinrichtung, einem Glühzündorgan zum Zünden von in der Brenn/Misch-Kammer vorhandenem Kohlenwasserstoff/Luft-Gemisch.

Wesentlich bei der vorliegenden Erfindung ist, dass die Wärmeenergie zum Erreichen der Betriebstemperaturen insbesondere im Bereich auch des Katalysatormaterial des Reformers nicht nur durch beispielsweise elektrisch betreibbare Heizgeräte bereitgestellt wird, sondern dass zunächst in der Verdampferanordnung das eigentlich zur Wasserstoffgewinnung zu zersetzende Gemisch verbrannt wird. Bei dieser Verbrennung werden hohe Temperaturen erzeugt, so dass die auch in Richtung zu dem Katalysatormaterial bzw. den dort vorhandenen Systemkomponenten des Reformers strömenden Verbrennungsabgase dort zur sehr schnellen Erwärmung beitragen. Es hat sich gezeigt, dass mit dieser erfindungsgemäßen Anordnung eine Erwärmung von sehr niedrigen Starttemperaturen auf die zum Betrieb erforderlichen Temperaturen im Bereich von über 300°C in weniger als 15 bis 30 Sekunden erreicht werden kann.

Bei der erfindungsgemäßen Anordnung kann beispielsweise vorgesehen sein, dass die Kohlenwasserstoffverdampfungseinrichtung in einem Bodenbereich der Brenn/Misch-Kammer angeordnet ist. Weiter ist es möglich, dass die Eintrittsöffnungsanordnung in einem die Brenn/Misch-Kammer umgebenden Wandungsbereich ausgebildet ist. Um die Verbrennung insbesondere in dem Bereich zu starten, in dem eine hohe Konzentration an verbrennbarem Brennstoff, also Kohlenwasserstoff, vorhanden ist, wird vorgeschlagen, dass das Glühzündorgan langgestreckt ist und sich in Abstand zur Kohlenwasserstoffverdampfungseinrichtung näherungsweise parallel zu dieser erstreckt.

Die erste Heizeinrichtung ist vorzugsweise elektrisch betreibbar.

Gemäß einem weiteren vorteilhaften Aspekt kann eine zweite Heizeinrichtung vorgesehen sein zur Erwärmung einer die Brenn/Misch-Kammer umgebenden Wandung oder/und einer in Strömungsrichtung an die Brenn/Misch-Kammer anschließenden Wandung.

Da beispielsweise in einer Brennstoffzelle oder auch einem Abgasführungssystem einer Brennkraftmaschine in verschiedenen Bereichen sehr hohe Temperaturen vorliegen, wird gemäß einem weiteren Aspekt der vorliegenden Erfindung vorgeschlagen, dass die zweite Heizeinrichtung eine von erwärmtem Fluid durchströmbare Wärmetauscheranordnung umfasst. Das angesprochene erwärmte Fluid kann dann in denjenigen Bereichen erwärmt werden, in denen beispielsweise durch Ablaufen exothermer Reaktionen hohe Temperaturen auftreten.

Gemäß einem weiteren Aspekt der vorliegenden Erfindung wird die eingangs genannte Aufgabe gelöst durch ein Verfahren zum Starten einer Verdampferanordnung zur Erzeugung eines in einem Reformer zur Wasserstoffgewinnung zersetzbaren Kohlenwasserstoff/Luft-Gemisches, umfassend die Schritte:
a) Erwärmen und Verdampfen von flüssigem Kohlenwasserstoff oder kohlenwasserstoffhaltiger Flüssigkeit,
b) Mischen des im Schritt a) erzeugten Dampfes mit Luft,
c) Zünden des im Schritt b) erzeugten Gemisches zum Starten einer Gemisch-Verbrennung,
d) Aufrechterhalten der Verbrennung bis zum Ablauf einer vorbestimmten Zeitdauer oder/und bis in einem oder mehreren vorbestimmten Systembereichen eine vorbestimmte Temperatur vorliegt,
e) nach Ablauf der vorbestimmten Zeitdauer oder/und nach Erreichen der vorbestimmten Temperatur, Beenden der Verbrennung.

Gemäß der vorliegenden Erfindung wird also eine Verdampferanordnung derart betrieben, dass zunächst das eigentlich zur Wasserstoffgewinnung zu zersetzende Gemisch verbrannt wird, und dann, wenn die zur Wasserstoffgewinnung arbeitenden Systemkomponenten, also insbesondere der den Katalysator enthaltende Systembereich des Reformers, in einem Zustand sind, in dem die katalytische Reaktion ablaufen kann, wird die Verbrennung eingestellt. Darauf folgend steht dann das weiterhin erzeugte Gemisch zur Wasserstoffgewinnung zur Verfügung.

Beispielsweise kann vorgesehen sein, dass zur Verdampfung eine vorzugsweise elektrisch betreibbare Heizeinrichtung aktiviert wird. Diese Heizeinrichtung wird vorzugsweise zumindest während der Schritte c) und d) weiterhin aktiviert.

Um bei Erreichen des zum Ablauf der katalytischen Reaktion erforderlichen thermischen Zustands die Verbrennung beenden zu können, wird vorgeschlagen, dass im Schritt e) die Zufuhr von flüssigem Kohlenwasserstoff oder der kohlenwasserstoffhaltigen Flüssigkeit gedrosselt oder unterbrochen wird oder/und die Zufuhr von Luft gedrosselt oder unterbrochen wird. Die katalytische Reaktion kann nach Beenden der Verbrennung dadurch fortgesetzt bzw. gestartet werden, dass nach Beenden der Verbrennung im Schritt e) die Zufuhr von flüssigem Kohlenwasserstoff oder der kohlenwasserstoffhaltigen Flüssigkeit und die Zufuhr von Luft zur Erzeugung des zur Wasserstoffgewinnung zersetzbaren Gemisches fortgesetzt oder wiederaufgenommen wird.

Um beim Ablauf der katalytischen Reaktion das Bordspannungssystem eines Fahrzeugs so wenig als möglich zu belasten, wird vorgeschlagen, dass im oder/und nach dem Schritt e) die zumindest bis zur Erzeugung der Verbrennung aktivierte Heizeinrichtung nicht aktiviert wird.

Ferner kann bei dem erfindungsgemäßen Verfahren vorgesehen sein, dass als flüssiger Kohlenwasserstoff oder kohlenwasserstoffhaltige Flüssigkeit fossiler Brennstoff, vorzugsweise Dieselbrennstoff oder dergleichen, eingesetzt wird.

Ferner betrifft die vorliegende Erfindung einen Reformer zur Gewinnung von Wasserstoff aus einem Kohlenwasserstoff/Luft-Gemsich, umfassend eine erfindungsgemäße Verdampferanordnung.

Die vorliegende Erfindung wird nachfolgend mit Bezug auf die beiliegenden Zeichnungen detailliert beschrieben. Es zeigt:
- Fig. 1: eine erfindungsgemäße Verdampferanordnung im PrinzipLängsschnitt;
- Fig. 2: eine blockbildartige Darstellung eines Reformersystems in Verbindung mit einer erfindungsgemäßen Verdampferanordnung.

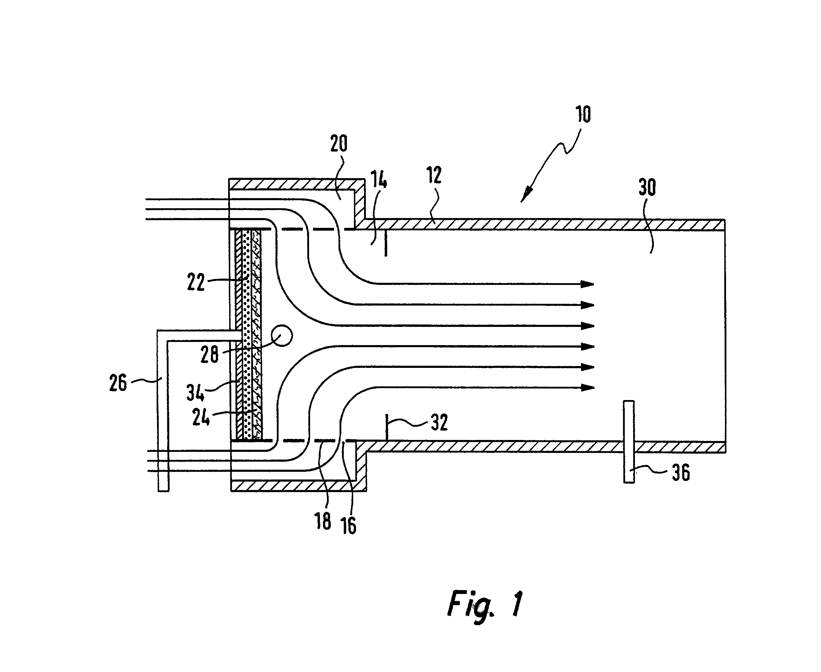

In der Figur 1 ist eine erfindungsgemäße Verdampferanordnung allgemein mit 10 bezeichnet. Die Verdampferanordnung 10 umfasst eine langgestreckte, röhrenartige Gehäuseanordnung 12, in welcher, wie im Folgenden beschrieben, ein Gemisch aus verdampftem Brennstoff, beispielsweise Dieselbrennstoff, und Luft gebildet wird. In dem Gehäuse 12 ist dazu eine Brenn/Misch-Kammer 14 vorgesehen, welcher über eine Mehrzahl von Eintrittsöffnungen 16 in einer Außenumfangswand 18 die Luft aus einem radial äußeren, ringartigen Raum 20 zugeführt wird. An einem Bodenbereich 22 der Brenn/Misch-Kammer 14 ist ein poröses Verdampfermedium 24 vorgesehen, welches beispielsweise durch Vliesmaterial oder sonstiges Gewebe oder mattenartiges Material, Schaumkeramik oder dergleichen gebildet sein kann. Eine Brennstoffzuführleitung 26 führt durch den Bodenbereich 22 hindurch und leitet den zu verdampfenden Brennstoff in das poröse Verdampfermedium 24 ein. In axialem Abstand, axial bezogen auf eine Gesamtströmungsrichtung innerhalb des rohrartigen Gehäuses 12, zu dem Bodenbereich 22 bzw. dem darauf angeordneten Verdampfermedium 24 liegt ein stiftartig ausgebildetes Zündorgan 28, beispielsweise ein Glühzündstift. Dieser erstreckt sich quer zu der angesprochenen Längs- oder Axialrichtung und liegt im Wesentlichen parallel zum Bodenbereich 22 bzw. der der Brenn/Misch-Kammer 14 zugewandten Seite des Verdampfermediums 24. Das durch Luftzufuhr einerseits und durch Brennstoffverdampfung andererseits in der Brenn/Misch-Kammer 14 gebildete Brennstoff/Luft-Gemisch, welches auch als Kohlenwasserstoff/Luft-Gemisch betrachtet werden kann, verlässt die Brenn/Misch-Kammer 14 und tritt in einen Volumenbereich 30 ein, in welchem das in der Figur nicht dargestellte Katalysatormaterial eines Reformers angeordnet sein kann. Das aus der Brenn/Misch-Kammer durch eine Blende 32 hindurch austretende und auf den Katalysator zu strömende Gemisch wird am Katalysator durch katalytische Reaktion aufgespalten, um Wasserstoff zu gewinnen. Dieser Wasserstoff kann dann weiter verwendet werden, beispielsweise in einer Brennstoffzelle zur Erzeugung elektrischer Energie oder in einem Abgasführungssystem einer Brennkraftmaschine zur Abgasreinigung.

Um in einem derartigen Reformer die katalytische Reaktion durchführen zu können, ist es erforderlich, dass nicht nur das Gemisch, das in dieser katalytischen Reaktion umgesetzt werden soll, sondern auch die verschiedenen Systemkomponenten, wie z. B. das Katalysatormaterial, das dieses umgebende Wandungsmaterial und dergleichen, eine bestimmte Temperatur aufweisen. Beispielsweise kann es bei Einsatz eines Diesel/Luft-Gemisches erforderlich sein, zum Starten der katalytischen Reaktion hier eine Erwärmung auf etwa 320 °C vorzusehen. Ist diese Reaktion einmal in Gang gesetzt, kann sie dann bei einer Temperatur von etwa 240 °C weiterhin ablaufen. Diese hohen Temperaturen erfordern insbesondere zum Starten der katalytischen Reaktion einen vergleichsweise hohen Energieeintrag, um die erforderliche Erwärmung zu erzeugen. Es sei darauf hingewiesen, dass derartige Systeme beispielsweise in Fahrzeugen eingesetzt werden und diese auch bei Außentemperaturen im Bereich von bis zu -40°C betriebsfähig sein müssen. Dies bedeutet also, dass in vergleichsweise kurzer Zeit eine Erwärmung der verschiedenen Systemkomponenten über einen Temperaturbereich von nahezu 400°C erlangt werden muss.

Die Art und Weise, wie bei der erfindungsgemäßen Verdampferanordnung 10 diese Erwärmung erlangt wird, wird im Folgenden beschrieben.

Man erkennt in der Figur, dass am Bodenbereich 22 eine Heizeinrichtung 34 vorgesehen ist. Diese ist vorzugsweise elektrisch betreibbar und umfasst beispielsweise eine Heizspirale oder dergleichen, die im dargestellten Beispiel an der von der Brenn/Misch-Kammer 14 abgewandten Seite des Bodenbereichs 22 liegt. Selbstverständlich ist es auch möglich, diese Heizeinrichtung 34 zwischen dem Bodenbereich 22 und dem porösen Verdampfermedium 24 zu positionieren, um einen noch effizienteren Wärmeeintrag in dieses poröse Verdampfermedium zu erlangen. Durch Erregung der Heizeinrichtung 34 kann also die Temperatur im Bereich des porösen Verdampfermediums 24 erhöht werden, so dass dort das Abdampfen des über die Leitung 26 zugeführten Brennstoffs verstärkt auftreten wird. Dabei bildet sich, wie bereits ausgeführt, ein sehr stark mit Brennstoff angereichertes Gemisch aus Luft und Brennstoffdampf in der Brenn/Misch-Kammer 14, wobei hier vorzugsweise derart gearbeitet wird, dass sich ein mageres Gemisch im Bereich von λ = 2 einstellt.

Die durch die Heizeinrichtung 34 eingetragene Wärmemenge würde jedoch nicht ausreichen, um das Gesamtsystem, insbesondere den katalysatornahen Systembereich, auf die erforderlichen Temperaturen zu bringen. Gemäß der vorliegenden Erfindung wird daher beim Starten einer derartigen Verdampferanordnung 10 bzw. eine Reformers zur Wasserstoffgewinnung so vorgegangen, dass das in der Brenn/Misch-Kammer 14 erzeugte Brennstoff/Luft-Gemisch durch Erregung des Zündorgans 28 gezündet wird. Das Zündorgan 28 kann gleichzeitig mit der Erregung der Heizeinrichtung 34 aktiviert werden, kann jedoch auch erst dann aktiviert werden, wenn nach bereits erfolgter Aktivierung der Heizeinrichtung 34 eine ausreichende Menge an Brennstoffdampf in der Brenn/Misch-Kammer 14 vorhanden ist. Da das Zündorgan 28 in einem dem porösen Verdampfermedium 24 nahen Bereich positioniert ist, ist es in einem Bereich wirksam, in dem ein vergleichsweise hoher Brennstoffdampfanteil vorhanden sein wird, so dass die Verbrennung schnell auftreten wird und sich bedingt durch die über die Öffnungen 16 einströmende Luft schnell über den gesamten Bereich der Brenn/Misch-Kammer 14 ausbreiten wird. Die Verbrennungsflamme und die heißen Verbrennungsabgase werden mit der Strömung durch die Blende 32 hindurch mitgetragen und gelangen somit in den Volumenbereich 30. Dort tragen sie sehr effektiv und schnell zur Erwärmung der dort gelegenen Systemkomponenten bei, insbesondere auch zur Erwärmung des Katalysatormaterials. Es hat sich gezeigt, dass auf diese Art und Weise die zum Starten der Katalysatorreaktion erforderlichen Temperaturen in etwa 15 bis 30 Sekunden erlangt werden können.

Liegen in dem für die katalytische Reaktion wesentlichen Systembereich die erforderlichen Temperaturen vor, was entweder durch einen Temperatursensor 36 erfasst werden kann, oder durch Vorgabe einer vorbestimmten Verbrennungszeitdauer sichergestellt werden kann, wird die Verbrennung beendet. Dies kann dadurch erfolgen, dass für eine kurze Zeitdauer die Brennstoffzufuhr oder/und die Luftzufuhr in die Brenn/Misch-Kammer 14 unterbrochen oder verringert wird. Nach Erlöschen der Verbrennungsflamme wird die Brennstoffzufuhr bzw. die Luftzufuhr wieder aufgenommen, so dass weiterhin dann in der Brenn/Misch-Kammer 14 das im Reformer umzusetzende Kohlenwasserstoff/Luft-Gemisch nunmehr im Bereich λ = 0,4 erzeugt wird, das im nicht verbrannten Zustand zum Katalysatormaterial gelangen wird. Da dieses unmittelbar zuvor durch die heißen Verbrennungsabgase auf die erforderlichen Temperaturen erwärmt worden ist, startet die katalytische Reaktion zur Gewinnung von Wasserstoffen.

Bei der vorangehend beschriebenen erfindungsgemäßen Vorgehensweise kann die Heizeinrichtung 34 zum möglichst schnellen Ausbreiten der Verbrennung und somit auch zum möglichst schnellen Erwärmen der wesentlichen Systembereiche so lange betrieben werden, bis nach Erreichen der vorbestimmten Temperaturen durch die vorangehend beschriebenen Prozeduren die Verbrennung beendet wird. Selbstverständlich ist es auch möglich, dann, wenn durch die Erregung des Glühzündorgans 28 die Verbrennung einmal in Gang gesetzt worden ist, zum Einsparen elektrischer Energie die Heizeinrichtung 34 abzustellen. Auch in diesem Falle wird eine sehr rasche Ausbreitung der Verbrennung auftreten, da vor allem auch im Bereich der Brenn/Misch-Kammer 14 durch die Verbrennung sehr hohe und die Abdampfung von zunächst noch flüssigem Brennstoff aus dem porösen Medium 24 unterstütztende Temperaturen vorliegen. Nach dem Beenden der Verbrennung wird die Heizeinrichtung 34 vorzugsweise nicht mehr in Betrieb gesetzt, um vor allem beim Einsatz in einem Fahrzeug das Bordspannungssystem nicht übermäßig zu belasten. Die Erwärmung des in der Brenn/Misch-Kammer 14 zu erzeugenden Gemisches kann in dieser Phase dann beispielsweise dadurch erlangt werden, dass aus den beispielsweise in einer Brennstoffzelle ablaufenden Prozessen oder aus den im Katalysator des Reformers ablaufenden Prozessen Wärme gewonnen wird, die über ein Wärmeübertragungsfluid und entsprechende Wärmetauscheranordnungen dann auf das Gehäuse 12 übertragen wird. Selbstverständlich ist es auch möglich, im Bereich des Gehäuses 12 eine weitere, beispielsweise elektrisch betreibbare Heizeinrichtung vorzusehen, um beispielsweise bei sehr niedrigen Außentemperaturen die katalytische Reaktion aufrecht zu erhalten. Beim Einsatz in Verbindung mit einem Abgasführungssystem einer Brennkraftmaschine ist es selbstverständlich möglich, die von der Brennkraftmaschine abgegebenen Abgase um das Gehäuse 12 strömen zu lassen oder diesen Abgasen Wärme zu entziehen und sie auf das Gehäuse 12 zu übertragen.

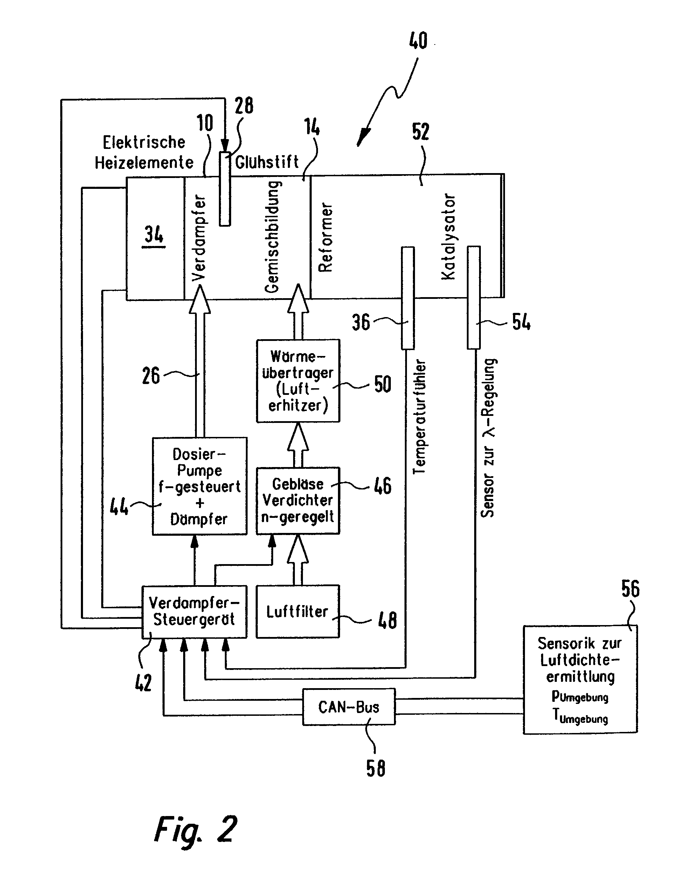

In Fig. 2 ist ein Reformersystem 40 dargestellt, bei welchem die erfindungsgemäße Verdampferanordnung 10 zum Einsatz kommt. Man erkennt auch in der Fig. 2 in der Verdampferanordnung 10 die unter Ansteuerung eines Steuergerätes 42 stehende Heizeinrichtung 34. Eine ebenfalls unter der Ansteuerung des Steuergeräts 42 stehende Dosierpumpe 44 speist den zu verdampfenden Brennstoff bzw. Kohlenwasserstoff über die Leitung 26 in die Brenn/Misch-Kammer 14 ein, wobei diese Einspeisung in frequenzgesteuerter, also getakteter Art und Weise vorgenommen werden kann. Der Dosierpumpe 44 kann ein Dämpfer zugeordnet sein, also ein Zwischenspeicher, aus welchem dann die geförderte Flüssigkeit in Richtung Brenn/Misch-Kammer 14 in mehr oder weniger kontinuierlicher Art und Weise abgegeben wird. Ein ebenfalls unter der Ansteuerung des Steuergeräts 42 stehendes Gebläse 46 nimmt Luft über einen Luftfilter 48 auf und speist diese, ggf. nach Durchlaufen eines Wärmetauschers 50 in vorerwärmter Art und Weise in die Brenn/Misch-Kammer 14 zur Gemischbildung ein. Man erkennt ferner den als Zündorgan wirksamen Glühzündstift 28, welcher das in der Brenn/Misch-Kammer 14 gebildete Brennstoff/Luft-Gemisch zur Zündung bringt. Stromabwärts der Brenn/Misch-Kammer 14 befindet sich der Reformerteil 52 des Reformersystems 40 mit dem Katalysatormaterial. In diesem Bereich ist auch der Temperatursensor 36 vorgesehen. Ferner kann ein Lambdasensor 54 vorgesehen sein, welcher dazu dient, wie vorangehend bereits beschrieben in verschiedenen Phasen des Betriebs das Brennstoff/Luft-Verhältnis so einzustellen, dass ein gewünschter Lambdawert erhalten wird.

Die verschiedenen vom Steuergerät 42 vorgenommenen Ansteuermaßnahmen laufen unter Miteinbeziehung verschiedener Parameter, wie z. B. der vom Temepratursensor 36 erfassten Temperatur, dem Ausgangswert des Lambdasensors 54 sowie verschiedener weiterer Sensoren, ab, die für den Betrieb des Systems 40 relevante Daten liefern. Dies kann beispielsweise auch zur korrekten Einstellung des Gemisches eine Sensorik 56 sein, durch welche der Umgebungsdruck und die Umgebungstemperatur ggf. zur Luftdichteermittlung erfasst werden und deren Erfassungsdaten über ein Datenbussystem 58 in das Steuergerät 42 eingeleitet werden.

Das in der Fig. 2 dargestellte System kann zum Starten einerseits und zur Wasserstoffgewinnung andererseits dann so wie vorangehend mit Bezug auf die Fig. 1 bereits beschrieben betrieben werden.

Durch die vorliegende Erfindung sind eine Verdampferanordnung bzw. ein Verfahren zum Starten derselben bzw. ein Verfahren zum Starten eines Reformers zur Gewinnung von Wasserstoff vorgesehen, die bei vergleichsweise einfachem Aufbau sicherstellen, dass in kürzester Zeit die zum Durchführen der katalytischen Reaktion erforderlichen Temperaturen erreicht werden können, ohne das elektrische Bordspannungssystem übermäßig belasten zu müssen. Dabei zieht die Erfindung im Wesentlichen Nutzen daraus, dass das im Reformer zu zersetzende Gemisch selbst verbrennbar ist, so dass in einer kurzen Zeitdauer der Startphase zwar auf die Durchführung einer katalytischen Reaktion verzichtet wird, stattdessen aber das eigentlich zur Wasserstoffgewinnung herangezogene Grundmaterial verbrannt wird, um das Reformersystem auf die erforderlichen Temperaturen zu bringen.

## Patentansprüche

1. Verdampferanordnung zur Erzeugung eines in einem Reformer zur Wasserstoffgewinnung zersetzbaren Kohlenwasserstoff/Luft-Gemisches, umfassend einen Brenner/Verdampfer-Bereich, welcher aufweist:
- eine Brenn/Misch-Kammer (14), in welche Luft über eine Eintrittsöffnungsanordnung (16) eintritt,
- eine Kohlenwasserstoffverdampfungseinrichtung (24, 34), umfassend ein poröses Verdampfermedium (24) und diesem zugeordnet eine erste Heizeinrichtung (34),
- ein Glühzündorgan (28) zum Zünden von in der Brenn/Misch-Kammer (14) vorhandenem Kohlenwasserstoff/Luft-Gemisch.

2. Verdampferanordnung nach Anspruch 1,
**dadurch gekennzeichnet, dass** die Kohlenwasserstoffverdampfungseinrichtung (24, 34) in einem Bodenbereich (22) der Brenn/Misch-Kammer (14) angeordnet ist.

3. Verdampferanordnung nach Anspruch 1 oder 2,
**dadurch gekennzeichnet, dass** die Eintrittsöffnungsanordnung (16) in einem die Brenn/Misch-Kammer (14) umgebenden Wandungsbereich (18) ausgebildet ist.

4. Verdampferanordnung nach einem der Ansprüche 1 bis 3,
**dadurch gekennzeichnet, dass** das Glühzündorgan (28) langgestreckt ist und sich in Abstand zur Kohlenwasserstoffverdampfungseinrichtung (24, 34) näherungsweise parallel zu dieser erstreckt.

5. Verdampferanordnung nach einem der Ansprüche 1 bis 4,
**dadurch gekennzeichnet, dass** die erste Heizeinrichtung (34) elektrisch betreibbar ist.

6. Verdampferanordnung nach einem der Ansprüche 1 bis 5,
**gekennzeichnet durch** eine zweite Heizeinrichtung zur Erwärmung einer die Brenn/Misch-Kammer (14) umgebenden Wandung oder/und einer in Strömungsrichtung an die Brenn/Misch-Kammer (14) anschließenden Wandung.

7. Verdampferanordnung nach Anspruch 6,
**dadurch gekennzeichnet, dass** die zweite Heizeinrichtung eine von erwärmtem Fluid durchströmbare Wärmetauscheranordnung umfasst.

8. Verfahren zum Starten einer Verdampferanordnung (10) zur Erzeugung eines in einem Reformer zur Wasserstoffgewinnung zersetzbaren Kohlenwasserstoff/Luft-Gemisches, insbesondere einer Verdampferanordnung (10) nach einem der vorangehenden Ansprüche, umfassend die Schritte:
a) Erwärmen und Verdampfen von flüssigem Kohlenwasserstoff oder kohlenwasserstoffhaltiger Flüssigkeit,
b) Mischen des im Schritt a) erzeugten Dampfes mit Luft,
c) Zünden des im Schritt b) erzeugten Gemisches zum Starten einer Gemisch-Verbrennung,
d) Aufrechterhalten der Verbrennung bis zum Ablauf einer vorbestimmten Zeitdauer oder/und bis in einem oder mehreren vorbestimmten Systembereichen eine vorbestimmte Temperatur vorliegt,
e) nach Ablauf der vorbestimmten Zeitdauer oder/und nach Erreichen der vorbestimmten Temperatur, Beenden der Verbrennung.

9. Verfahren nach Anspruch 8,
**dadurch gekennzeichnet, dass** zur Verdampfung eine vorzugsweise elektrisch betreibbare Heizeinrichtung (34) aktiviert wird.

10. Verfahren nach Anspruch 9,
**dadurch gekennzeichnet, dass** die Heizeinrichtung (34) zumindest während der Schritte c) und d) aktiviert bleibt.

11. Verfahren nach einem der Ansprüche 8 bis 10,
**dadurch gekennzeichnet, dass** im Schritt e) die Zufuhr von flüssigem Kohlenwasserstoff oder der kohlenwasserstoffhaltigen Flüssigkeit gedrosselt oder unterbrochen wird oder/und die Zufuhr von Luft gedrosselt oder unterbrochen wird.

12. Verfahren nach Anspruch 11,
**dadurch gekennzeichnet, dass** nach Beenden der Verbrennung im Schritt e) die Zufuhr von flüssigem Kohlenwasserstoff oder der kohlenwasserstoffhaltigen Flüssigkeit und die Zufuhr von Luft zur Erzeugung des zur Wasserstoffgewinnung zersetzbaren Gemisches fortgesetzt oder wiederaufgenommen wird.

13. Verfahren nach einem der Ansprüche 8 bis 12,
**dadurch gekennzeichnet, dass** im oder/und nach dem Schritt e) die zumindest bis zur Erzeugung der Verbrennung aktivierte Heizeinrichtung (34) nicht aktiviert wird.

14. Verfahren nach einem der Ansprüche 8 bis 13,
**dadurch gekennzeichnet, dass** als flüssiger Kohlenwasserstoff oder kohlenwasserstoffhaltige Flüssigkeit fossiler Brennstoff, vorzugsweise Dieselbrennstoff oder dergleichen, eingesetzt wird.

15. Reformer zur Gewinnung von Wasserstoff aus einem Kohlenwasserstoff/Luft-Gemisch, umfassend eine Verdampferanordnung nach einem der Ansprüche 1 bis 7.
